Europäisches Patentamt

European Patent Office

Office européen des brevets

(11) Veröffentlichungsnummer : **0 107 025**
**B1**

(12) **EUROPÄISCHE PATENTSCHRIFT**

(45) Veröffentlichungstag der Patentschrift :
20.08.86

(21) Anmeldenummer : 83109188.9

(22) Anmeldetag : 16.09.83

(51) Int. Cl.⁴ : **H 02 K 5/22**

(54) Am Ständerblechpaket einer elektrischen Kleinmaschine festlegbare Verbindungs-Vorrichtung und Verfahren zur Herstellung der Verbindungen.

(30) Priorität : 30.09.82 DE 3236326

(43) Veröffentlichungstag der Anmeldung :
02.05.84 Patentblatt 84/18

(45) Bekanntmachung des Hinweises auf die Patenterteilung : 20.08.86 Patentblatt 86/34

(84) Benannte Vertragsstaaten :
AT DE FR GB IT SE

(56) Entgegenhaltungen :
DE-B- 1 082 816
DE-B- 1 284 505
FR-A- 1 531 915
FR-A- 2 135 283
FR-A- 2 387 532
GB-A- 1 497 560
US-A- 3 293 463
US-A- 3 350 586
US-A- 3 502 917
US-A- 3 518 616

(73) Patentinhaber : Siemens Aktiengesellschaft Berlin
und München
Wittelsbacherplatz 2
D-8000 München 2 (DE)

(72) Erfinder : Maier, Erich
Am Eselsbach 11
D-8700 Würzburg (DE)
Erfinder : Rohloff, Rolf
Flürleinstrasse 16
D-8700 Würzburg (DE)
Erfinder : Reisenweber, Walter, Dipl.-Ing.
Im Weingarten 8
D-8744 Mellrichstadt (DE)
Erfinder : Wustmann, Oswald
Mühlweg 28
D-8702 Gerbrunn (DE)

**Beschreibung**

Die Erfindung bezieht sich auf eine am Ständer einer elektrischen Kleinmaschine festlegbare Verbindungsvorrichtung gemäß Oberbegriff des Patentanspruchs 1 und auf ein Verfahren zur Herstellung der Verbindungen mittels dieser Verbindungsvorrichtung ; eine Verbindungsvorrichtung der vorgenannten Art ist durch die US-A-3 518 616 bekannt.

Im bekannten Fall der US-A-3 518 616 ist das Unterteil der zweiteiligen Kunststoff-Verbindungsvorrichtung außen an einem das Ständerblechpaket umgebenden Ständergehäuse fixiert. In die Kammern des Unterteils sind äußere Anschlußleitungen an ihrer Isolierummantelung eingeklemmt und an vorderen abisolierten Enden mit den Spulenwicklungsenden verbunden, die durch konische Schlitzöffnungen im Unterteilboden eingeführt und zur Vorfixierung festgeklemmt werden können. Nach dem Verbinden von Spulenwicklungsenden und äußeren Anschlußleitungen wird das Oberteil über das Unterteil geschwenkt und an diesem verrastet ; dabei wird durch an der Unterseite des Oberteils angeformte Nocken die äußere Anschlußleitung in den Kammern des Unterteils zusätzlich niedergehalten. ·

Aufgabe der vorliegenden Erfindung ist die insbesondere im Hinblick auf eine vollautomatische Fließbandfertigung vereinfachte Kontaktierung und Festlegung der in bestimmter Weise untereinander bzw. mit einer äußeren Anschlußleitung zu verbindenden Wicklungsenden eines bewickelten Ständerblechpaketes.

Die Lösung der gestellten Aufgabe gelingt bei einer. Verbindungsvorrichtung der eingangs genannten Art durch die kennzeichnende Lehre des Patentanspruchs 1 ; vorteilhafte Ausgestaltungen der Erfindung sind jeweils Gegenstand der Unteransprüche.

Die erfindungsgemäße Verbindungsvorrichtung erlaubt auf einfache, übersichtliche und für eine Automatenfertigung gut zugängliche Weise das Vorsortieren, Festlegen und Anschließen der in bestimmter Weise zu verbindenden bzw. anzuschließenden Wicklungsenden unmittelbar beim Bewickeln des Ständerblechpaketes ohne Gefahr einer Beschädigung dieser Wicklungsenden beim weiteren Herstellungsablauf des Elektrokleinmotors, insbesondere beim Formen und Verfestigen der Wicklung bzw. der Wickelköpfe ; dabei ist jederzeit gewährleistet, daß die Verbindungsstelle zwischen Ständerspulenende und Steckerzunge bzw. Steckerhülse nicht mechanisch durch axiales Drücken belastet wird und die Steckerzungen bzw. Steckerhülse sicher im Steckergehäuse fixiert sind. In zweckmäßiger Weise sind dabei die Fixiergabeln entsprechend der Nutteilung des Ständerblechpaketes am Unterteil des Steckergehäuses angeordnet und derart geformt, daß zwischen den Fixiergabeln jeweils Freiräume zur ungehinderten Zuführung von Bandagiergabeln bei der Formung und Verfestigung des Wickelkopfes verbleiben.

Zweckmäßigerweise wird das Unterteil mittels axial gerichteter schwalbenschwanzförmiger Anformungen auf eine entsprechende Ausnehmung in der Oberfläche des Ständerblechpaketes axial aufgeschoben, wobei nach einer Ausgestaltung der Erfindung die Fixiergabeln gleichzeitig als axiale Anschläge zur axialen Fixierung des einschiebbaren Unterteils in einer bestimmten axialen Einschubtiefe ausgebildet sind.

In vorteilhafter Weise wird das äußere Netzanschlußkabel erst nach der Formung der Ständerwicklung mit dem Steckergehäuse verbunden ; dazu ist nach einer Ausgestaltung der Erfindung vorgesehen, daß das Steckergehäuse mit einem Gegensteckergehäuse insondere durch Aufstecken verbindbar ist, in dem zu den Steckerzungen bzw. Steckerhülsen des Steckergehäuses korrespondierende, mit den Enden des äußeren Netzanschlußkabels verbundene Gegensteckerhülsen bzw. Gegensteckerzungen fixiert gehalten sind ; dies erlaubt insbesondere auch eine Gegenstecker-Kontaktierung mit Gruppensteckern erst am Ende der Motormontage oder sogar erst kundenseitig, gegebenenfalls mit kundenspezifischen Anschlußbzw. Schaltungsverbindungen. Zur Sicherung einer zweckmäßigen Führung des aus dem Gegensteckergehäuse herausragenden Endes des Netzanschlußkabels und gleichzeitigen Zugentlastung dieses Netzanschlußkabels ist das Gegensteckergehäuse zumindest an seiner Netzanschlußkabel-Ausgangsseite mit einem über die Ausgangsseite und einem Teil des herausgeführten Netzanschlußkabels überklappbaren Abschlußdeckel versehen, der in fertigmontierten Zustand von Steckergehäuse und Gegensteckergehäuse mit Abschlußdeckel das Netzanschlußkabel mit einer Kabelschelle gegen eine Netzanschlußkabel-Führung am Oberteil des Steckergehäuses andrückt.

Die Erfindung sowie weitere vorteilhafte Ausgestaltungen der Erfindung werden im folgenden anhand eines schematisch dargestellten Ausführungsbeispiels in der Zeichnung näher erläutert. Darin zeigen :

Figur 1 in einer Steitenansicht eine komplett montierte Verbindungs-Vorrichtung nach dem axialen Einschieben auf ein Ständerblechpaket,

Figuren 2, 3 die Kunststoffspritzgußteile von Steckergehäuse und Gegensteckergehäuse mit Abschlußdeckel in gegenseitiger Aufsteckrichtung,

Figur 4 in einem axialen Längsschnitt einen von der rechten Stirnseite auf ein Blechpaket aufgeschobenes bestücktes Steckergehäuse,

Figur 5 eine Innendraufsicht auf das mit einem Steckerstift bestückte Unterteil mit einstückig über ein Filmscharnier daran gehaltertem überklappbaren Oberteil,

Figur 6 das Unterteil gemäß Schnittverlauf VI-VI in Fig. 5,

Figur 7 das Oberteil gemäß Schnittverlauf VII-VII in Fig. 5,

Figur 8 das Unterteil gemäß Schnittverlauf VIII-VIII in Fig. 5,

Figur 9 eine in Steckrichtung stirnseitige Draufsicht auf das Gegensteckergehäuse mit über ein Filmscharnier angeformtem Abschlußdeckel vor dem Überklappen über das Gegensteckergehäuse,

Figur 10 das Gegensteckergehäuse mit angeformtem Abschlußdeckel gemäß Schnittverlauf X-X in Fig. 9,

Figur 11 den Abschlußdeckel gemäß Schnittverlauf XI-XI in Fig. 9,

Figur 12 eine Außendraufsicht auf das Gegensteckergehäuse gemäß Fig. 9.

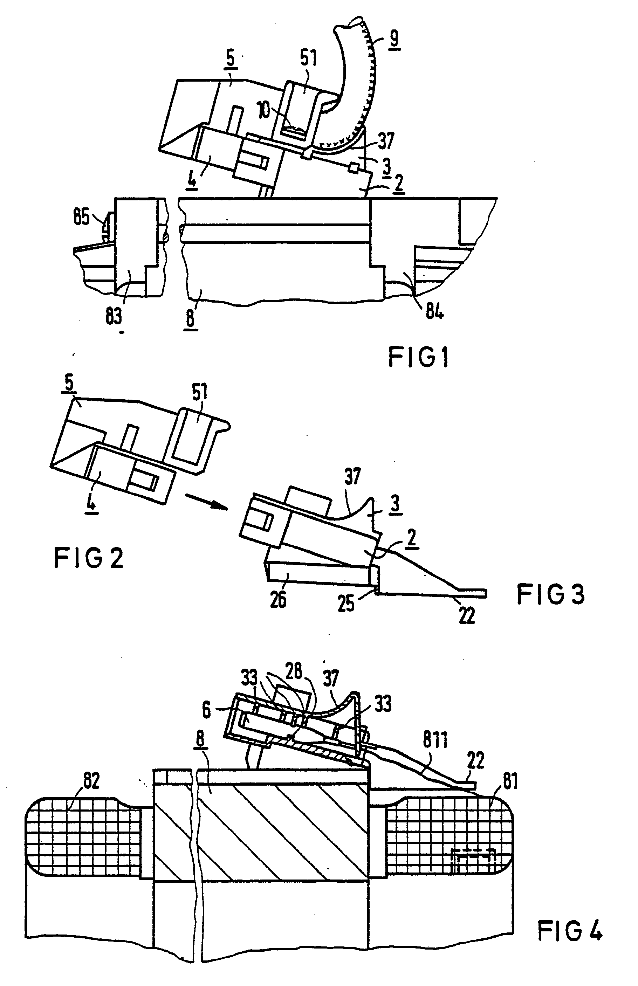

Figur 1 zeigt in einer axialen Seitenansicht einen oberen Teil eines Ständerblechpaketes 8 eines Kleinmotors, mit stirnseitig anliegenden und durch eine Schraube 85 gegen das Blechpaket 8 gedrückten Lagerschilden 83, 84. Am äußeren Umfang des Ständerblechpaketes 8 ist eine komplett montierte Verbindungs-Vorrichtung eingeschoben und fixiert gehalten. Die Verbindungs-Vorrichtung besteht im wesentlichen aus einem Steckergehäuse mit einem Unterteil 2 und einem Oberteil 3 sowie einem Gegensteckergehäuse 4 mit übergeklapptem Abschlußdeckel 5. Das Unterteil 2 ist mit schwalbenschwanzförmigen Führungsteilen 26 in entsprechende Nuten am äußeren Umfang des Ständerblechpaketes 8 von der rechten Stirnseite her vor dem Anlegen des Lagerschildes 84 eingeschoben. Die axiale Eintauchtiefe wird durch einen an das Unterteil 2 angeformten, aus Fig. 3 ersichtlichen Anschlag 25 begrenzt. In der Anschlaggegenrichtung wird die Verbindungs-Vorrichtung über das eingeschobene Unterteil 2 durch das im fertigmontierten Zustand des Motors gegengedrückte Lagerschild 84 axial fixiert.

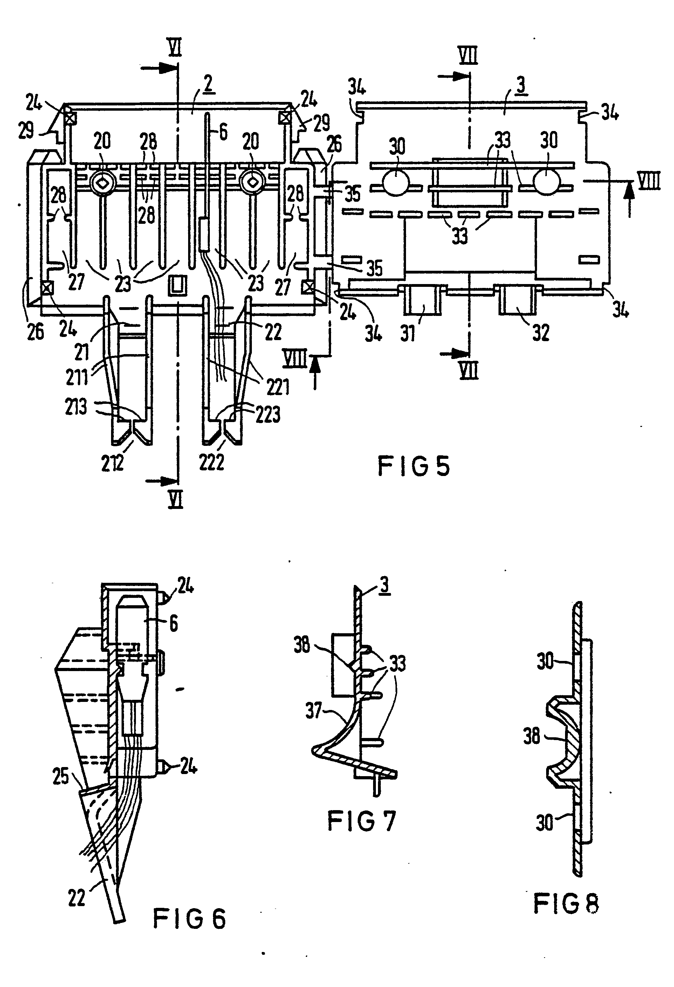

Wie aus Fig. 2, 3 weiterhin ersichtlich, werden das Steckergehäuse 2, 3 und das Gegensteckergehäuse 4 mit dem über ein Filmscharnier einstückig angeformten Abschlußdeckel 5 ineinander gesteckt und durch später noch beschriebene Rastmittel gegeneinander formschlüssig in ihrer Endstellung gesichert. An der rechten Vorderkante des Unterteils 2 sind axial von der Stirnseite des Ständer-blechpaketes 8 abstehende und bis in den Bereich des Wickelkopfes 81 der in der Ständerblechpaket 8 eingebrachten Ständerwicklung reichende Fixiergabeln 21, 22 einstückig angeformt, von denen in Fig. 3, 4 jeweils eine ein Ständerspulenende 811 aufnehmende Fixiergabel 22 ersichtlich ist und deren detailmäßige Ausbildung insbesondere aus Fig. 5 ersichtlich ist. Das aus dem Gegensteckergehäuse 4 herausgeführte äußere Netzanschlußkabel 9 ist durch eine an dem überklappbaren Abschlußdeckel 5 endseitig angeformte Kabelschelle 51 über Schrauben 10 im Sinne einer zugentlasteten Halterung gegen eine an das Oberteil 3 angeformte Netzanschlußkabel-Führung 37 gedrückt. Durch die Netzanschlußkabel-Führung 37 ist eine optimale Austrittsöffnung des Netzanschlußkabels auf einfache Weise festlegbar ; durch die zweckmäßige Schrägstellung des Steckergehäuses 2, 3 relativ zur Oberfläche des Stander-blechpaketes 8 ist eine gute Zugänglichkeit beim Aufstecken des Gegensteckergehäuses 4 gewährleistet.

Fig. 5 zeigt in näherer Detailausführung das am Blechpaket 8 gehaltene Steckergehäuse 2, 3 mit einem Unterteil 2 und einem über Filmscharniere 34 einstückig angeformten, von dem Unterteil 2 zunächst wegklappbaren und nach dessen Bestückung überklappbaren Oberteil 3. An der Vorderseite des Unterteils 2 sind zwei Fixiergabeln 21, 22 einstückig angeformt. Diese Fixiergabeln weisen an ihren freien Enden Einführtrichter 212, 222 zur Einführung der in den Fixiergabeln vorsortierbaren und festlegbaren Ständerspulenenden auf ; die inneren Enden der Einführtrichter 212, 222 münden in Hinterschneidungen 213, 223, durch die ein selbsttätiges Herausspringen der eingeführten Ständerspulenenden verhindert wird. Weiterhin ist das Unterteil 2 mit mehreren nach oben offenen Kammern 23 versehen, in die mit den aus den Fixiergabeln 21, 22 zugeführten Ständerwicklungsenden verbundene Steckerstifte 6 von oben eingelegt werden. Zur Verdeutlichung ist jeweils in eine der Kammern 23 in Fig. 5 und in Fig. 6 ein eingelegter Steckerstift 6 eingezeichnet.

Zur Fixierung der Steckerstifte 6, insbesondere in Steck- bzw. Gegensteckrichtung in ihrer Aufnahme im Steckergehäuse 2, 3, sind im Unterteil 2 verschiedenartige Stege 28 und im Oberteil 3 verschiedenartige Stege 33 angeformt, die entweder in Ausklinkungen der eingelegten Steckerstifte 6 eingreifen bzw. vor Randflächen der Steckerstifte 6 vorliegen oder bei zusammenmontiertem Unter- und Oberteil auf die Steckerstifte 6 aufdrücken und derart eine form- bzw. kraftschlüssige Fixierung auf einfache Weise gewährleisten.

Die Fixiergabeln 21, 22 sind im Bereich der Steckerstifte-Einlegestellen in den Kammern 23 kanalförmig mit Seitenwänden 211 bzw. 222 derart ausgebildet, daß eine hinreichende Isolier-Luft- und Kriechstrecke zwischen den Ständerspulenenden auch bei hohen Spannungsunterschieden gewährleistet sind. Seitlich von den zur Aufnahme von « aktiven » Kontakten vorgesehenen Kammern 23 ist jeweils eine weitere Kammer 27 zur Aufnahme einer « passiven » Verbindungs-Klemme vorgesehen, mit der verschiedene Ständerspulenenden, z. B. zu einem « inneren » Sternpunkt zusammengeschaltet jedoch nicht zum Anschluß an ein äußeres Netzanschlußkabel hingeführt sind. Beim praktischen Montageablauf werden z. B. in einer der beiden Fixiergabeln die zu einem inneren Sternpunkt zusammen zucrimpenden Ständerspulenenden und in der anderen Fixiergabel die in bestimmter Weise mit den Enden eines äußeren Netzanschlußkabels einzeln mittels eines Crimpanschlusses zu verbindenden Ständerspulenenden festgelegt und dann die derart vorgefügte Montageeinheit zu zwei, z. B. wegen der unterschiedlichen Drahtdicken verschiedenen, aufeinanderfolgenden Crimpstationen gefördert.

Die Breite der Fixiergabeln 21, 22 und ihr gegenseitiger Abstand ist in Anpassung an die Nutgrundbreite des darunterliegenden Ständerblechpaketes 8 derart gehalten, daß ein hinreichender Freiraum für Bandagiernadeln zwischen zwei Nuten gewährleistet ist. Die Länge der in den Fixiergabeln zur Aufnahme der Wicklungsdrahtenden befindlichen Schlitze richtet sich nach der Größe des Wickelkopfes und den Querschnitt der aufzunehmenden Ständerspulenenden.

Nach dem Bestücken des Unterteils 2 durch Einführen und Festlegen der Ständerspulenenden in die Fixiergabeln 21, 22, deren Festklemmen an Steckerzungen 6 und dem Einlegen der « aktiven » vercrimpten Steckerzungen 6 bzw. der « passiven » Crimpverbindungen in die Kammern 23 bzw. 27 wird das Oberteil 3 über das Unterteil 2 um die Achse der Filmscharniere 35 geschwenkt und in Schließstellung durch Einrasten von Ratstiften 24 am Unterteil 2 hinter Rastöffnungen 34 am Oberteil 3 gegenseitig fixiert. Beim Auflegen des Oberteils 3 auf das Unterteil 2 werden die kanalförmigen Fixiergabeln 21, 22 im Bereich der Seitenwände 211, 221 durch an das Oberteil angeformte entsprechende Abdeckungen 31, 32 verschlossen und damit in vorteilhafter Weise insbesondere nach radial außen gegenüber dem im fertigmontierten Zustand übergreifenden Lagerschild 84 (Fig. 1) mechanisch geschützt und elektrisch isoliert.

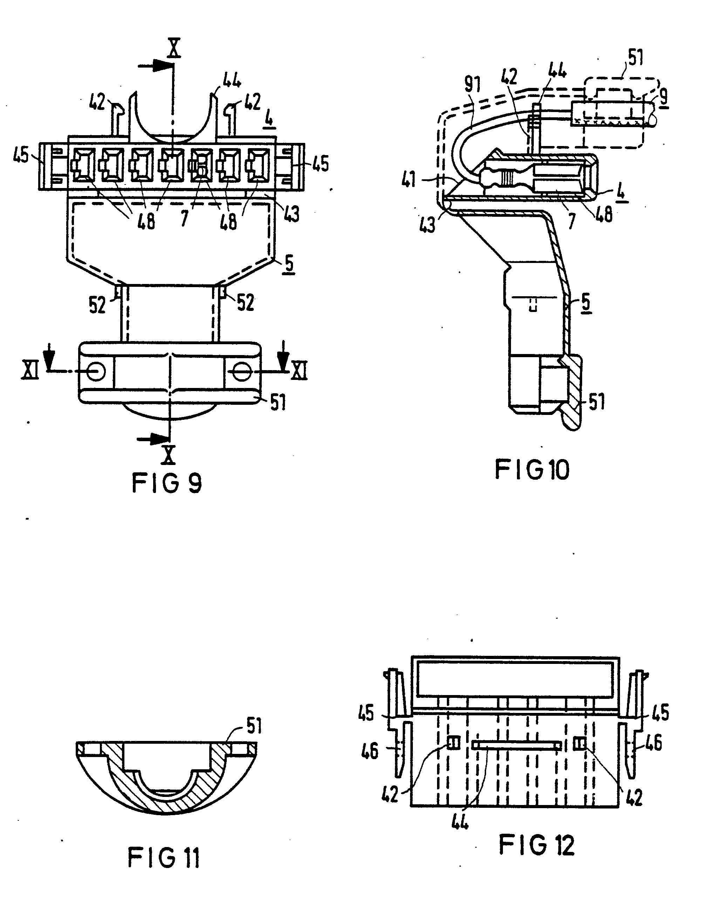

Fig. 9 bis 12 zeigen Detailausführungen des Gegensteckergehäuses 4 sowie des über ein Filmscharnier 43 angeformten Abschlußdeckels 5. Das bestückte Gegensteckergehäuse 4 ist korrespondierend zum bestückten Steckergehäuse 2, 3 ebenfalls als Gruppenstecker ausgebildet. Dazu sind den Steckerstiften 6 entsprechende Steckerhülsen 7 in taschenförmige Aufnahmen 48 des Gegensteckergehäuse 4 eingesteckt. Zur Fixierung in Steck- bzw. Gegensteckrichtung dienen an die Steckerhülsen 7 angeformte vorspringende Rastnasen, die im eingesteckten Zustand im Gegensteckergehäuse 4 hinter angeformte Rasthinterschneidungen formschlussig einschnappen. An das Gegensteckergehäuse 4 ist über ein Filmscharnier 43 der über die Ausgangsseite 41 überklappbare und dann die in Fig. 10 mit gestricheltem Linienzug angedeutete Lage einnehmende Abschlußdeckel 5 angeformt.

Wie aus Fig. 10 ersichtlich, ist an jede Steckerhülse 7 je ein Leitungsende 91 des äußeren Netzanschlußkabels 9 angecrimpt, durch die Ausgangsseite 41 herausgeführt und zunächst in eine an die Oberseite des Gegensteckergehäuses 4 angeformte Führungshülse 44 eingelegt. Beidseitig der Führungshülse 44 sind Raststifte 42 angeformt, die im übergeklappten Zustand des Abschlußdeckels 5 hinter Rastansätze 52 am Abschlußdeckel 5 einschnappen. Im zusammengesteckten Zustand von Steckergehäuse 2, 3 einerseits und Gegensteckergehäuse 4 mit Abschlußdeckel 5 sind die Steckerhülsen 7 des Gegensteckergehäuses 4 auf die jeweils gegenüberliegenden Steckerzungen 6 des Steckergehäuses 2, 3 aufgesteckt. Zur gegenseitigen Fixierung in Steck- bzw. Gegensteckrichtung von Steckergehäuse 2, 3 einerseits und Gegensteckergehäuse 4 mit Abschlußdeckel 5 andererseits dienen an der vorderen Steckseite des Steckergehäuses 2, 3 seitlich angeformte Rastnasen 29, die im fertig montierten Zustand in korrespondierende Rastöffnungen 46 von an den Seiten des Gegensteckergehäuses 4 angebrachten Rasthebeln 45 einrasten. Zur gegenseitigen Lösung von Steckergehäuse 2, 3 und Gegensteckergehäuse 4 mit Abschlußdeckel 5 können die Rasthebel 45 um ihre mittige Anformung an das Gegensteckergehäuse 4 mit ihren Rastöffnungen 46 nach außen bis zum Ausrasten aus den Rastnasen 29 weggekippt werden.

Wie insbes. aus Fig. 9, 10 ersichtlich, ist an das freie Ende des mit seinem anderen Ende über ein Filmscharnier 43 an das Gegensteckergehäuse 4 schwenkbar angeformten Abschlußdeckels 5 einstückig die Kabelschelle 51 mitangeformt. Im fertig montiertem Zustand der gesamten Verbindungs-Vorrichtung, d. h. insbesondere nach dem abschließenden Überklappen des Abschlußdeckels 51 über das in die Führungshülse 44 eingelegte und auf die Netzanschlußkabel-Führung 37 aufgelegte Netzanschlußkabel 9 wird die Kabelschelle 51 mittels auf der Kabelschelle 51 kopfseitig aufliegender, durch Durchführungsöffnungen 30 des Oberteils 3 des Steckergehäuses 2, 3 durchgeführter und in Vierkantlöcher 20 am Unterteil 2 des Steckergehäuses 2, 3 eingeschnittener bzw. eingeschraubter Schrauben festgezogen ; dabei ist zur zusätzlichen Festlegung des Netzanschlußkabels 9 im Bereich der von außen aufgedrückten Kabelschelle 51 in der Netzanschlußkabel-Führung 37 ein zur Unterseite des Netzanschlußkabels 9 vorstehender Andrucknocken 38 (Fig. 7, 8) vorgesehen.

Wie aus dem zuvor beschriebenen Aufbau der Verbindungs-Vorrichtung ersichtlich, sind sämtliche Verbindungsmaßnahmen leicht montierbar und demontierbar, derart daß z. B. bei Fehlermeldung in der elektrischen Endabnahme des angeschlossenen Kleinmotors das Oberteil 3 vom Unterteil 2 des Steckergehäuses 2, 3 wieder ausgerastet bzw. aufgeklappt und eine gegebenenfalls festgestellte falsche Verbindung gelöst und in richtiger Weise wieder hergesstellt werden kann. Durch die Trennung der gesamten Verbindungs-Vorrichtung in einen am Motorständerblechpaket festgelegten ersten Gruppenstecker und einen damit verbindbaren zweiten, mit dem äußeren Netzanschlußkabel verbundenen Gruppenstecker ist auf einfache Weise auch eine kundenspezifische Anpassung verschiedener Verschaltungen für die Städerspulenenden an einen weitgehend als Universalbauteil hergestellten und mit einem einheitlichen Steckergehäuse am Ständerblechpaket ausgestatteten elektrischen Kleinmotor möglich.

Ein vorteilhaftes Verfahren zur Herstellung der Verbindungen mit einer erfindungsgemäßen Verbindungs-Vorrichtung ist durch folgende aufeinanderfolgende Verfahrensschritte gekennzeichnet :

a) Unterteil des Steckergehäuses auf Blechpaket aufschieben,

b) Ständerspulenenden für verschiedene Schalt- bzw. Verbindungsstellen gruppenweise ordnen und jede Gruppe in je einer Fixiergabel festlegen,

c) Endcrimps für « passive » Kontaktstellen anschlagen und in Kammern des Unterteils einlegen,

d) die verbleibenden, den verschiedene Schaltstellen zugeordneten Gruppen an je eine Steckerzunge ancrimpen und Steckerzungen in Kammern des Unterteils einlegen,

e) Oberteil über bestücktes Unterteil überklappen und gegenseitig verrasten,

f) derart verschaltete Ständerwicklung elektrisch überprüfen, u. U. neu verschalten nach Öffnen des Steckergehäuses,

g) Wicklung formen und verfestigen,

h) Gegensteckergehäuse mit Netzanschlußkabel und überklapptem Abschlußdeckel auf Steckergehäuse aufstecken und Kabelschelle mit Zugentlastung am Unterteil des Steckergehäuses festschrauben.

## Patentansprüche

1. Am Ständer eines elektrischen Kleinmotors festlegbare, zumindest zweiteilige Kunststoff-Verbindungsvorrichtung zum Verbinden der Ständerspulenenden (811) bzw. zum Anschluß eines äußeren Netzanschlußkabels (9) mit einem am Ständer fixierbaren Unterteil (2) mit bis in den Bereich des Wickelkopfes reichenden kammartigen Fixiergabeln (21, 22) zur Aufnahme und Fixierung der Ständerspulenenden (811) sowie mit eingeformten, zu einem am Unterteil festlegbaren Oberteil hin offene Kammern (23) zum Einlegen der Ständerspulenenden (811) und des äußeren Netzanschlußkabels (9), die durch Auflegen des Oberteils (3) auf das Unterteil (2) in ihrer Position fixierbar sind, dadurch gekennzeichnet, daß als Verbindungsvorrichtung ein Steckergehäuse (2, 3) mit seinem Unterteil (2) am Ständerblechpaket (8) fixiert ist und in den Kammern (23) des Unterteils (2) mit den Ständerspulenenden (811) und/oder dem äußeren Netzanschlußkabel (9) verbundene Steckerstifte (6) bzw. Steckerhülsen formschlüssig gehalten und zumindest in Nähe der Sterckerstifte bzw. Steckerhülsen die axial an das Steckergehäuse (2, 3) angeformten Fixiergabeln (21, 22) im Sinne einer gegenseitigen elektrischen Isolierung der eingelegten Ständerspulenenden kanalförmig mit Seitenwänden (211, 211 bzw. 221, 221) ausgebildet bzw. das Oberteil (3) mit im fertigmontierten Zustand die Kanäle zwischen den Seitenwänden nach radial außen verschließenden Abdeckungen (31, 32) versehen sind.

2. Verbindungs-Vorrichtung nach Anspruch 1, dadurch gekennzeichnet, daß das Oberteil (3) über ein einstückig angeformtes Filmscharnier (35) mit dem Unterteil (2) verbunden und nach dem Überschwenken mit diesem verrast- bzw. verschraubbar ist.

3. Verbindungs-Vorrichtung nach Anspruch 1 und/oder 2 dadurch gekennzeichnet, daß die Fixiergabeln (21, 22) entsprechend der Nutteilung des Ständerblechpaketes (1) am Unterteil (2) des Steckergehäuses (2, 3) angeordnet und derart geformt sind, daß zwischen den Fixiergabeln (21, 22) jeweils Freiräume zur ungehinderten Zuführung von Bandagiergabeln bei der Formung und Verfestigung des Wickelkopfes (81) verbleiben.

4. Verbindungs-Vorrichtung nach einem der Ansprüche 1 bis 3, dadurch gekennzeichnet, daß die Fixiergabeln (21, 22) gleichzeitig als axiale Anschläge zur axialen Fixierung des in Nuten des Ständerblechpaketes (1) stirnseitig auf-schiebbaren Unterteils (2) des Steckergehäuses (2, 3) ausgebildet sind (Fig. 3, 6).

5. Verbindungs-Vorrichtung nach einem der Ansprüche 1 bis 4, dadurch gekennzeichnet, daß in dem Steckergehäuse (2, 3) sowohl mit den Ständerspulenenden (811) verbundene Steckerstifte (6) bzw. Steckerhülsen als auch korrespondierenden, mit den Enden des äußeren Netzanschlußkabels (9) verbundene Steckerhülsen (7) bzw. Steckerstifte fixiert sind.

6. Verbindungs-Vorrichtung nach einem der Ansprüche 1 bis 5, dadurch gekennzeichnet, daß in dem Steckergehäuse (2, 3) die mit den Ständerspulenenden (811) verbundenen Steckerstifte (6) bzw. Steckerhülsen und in einem auf das Steckergehäuse (2, 3) aufsteckbaren Gegensteckergehäuse (4) korrespondierende, mit den Enden des äußeren Netzanschlußkabels (9) verbundene Gegensteckhülsen (7) bzw. Gegensteckerstifte fixiert sind (Fig. 10, 12).

7. Verbindungs-Vorrichtung nach Anspruch 6, dadurch gekennzeichnet, daß das Gegensteckergehäuse (4) Teil eines externen Anschlußkabels eines Gerätes, insbesondere eines Waschautomaten, ist, in den ein mit dem Steckergehäuse (2, 3) versehener Kleinmotor einbaubar ist.

8. Verbindungs-Vorrichtung nach Anspruch 6, dadurch gekennzeichnet, daß das Gegensteckergehäuse (4) zumindest an seiner Netzanschlußkabel-Ausgangsseite (41) mit einem über die Ausgangsseite (41) und einen Teil des herausgeführten Netzanschlußkabels (9) überklappbaren Abschlußdeckel (5) versehen ist.

9. Verbindungs-Vorrichtung nach Anspruch 8, dadurch gekennzeichnet, daß der Abschlußdeckel (5) im übergeklappten Zustand am Gegensteckergehäuse (4) festlegbar (Rasthaken 42 ; 42 bzw. Rastnasen 52 ; 52) ist (Fig. 9).

10. Verbindungs-Vorrichtung nach einem der Ansprüche 8 und 9, dadurch gekennzeichnet, daß im Sinne einer zugentlasteten Halterung des Netzanschlußkabels (9) das oberteil (3) des Steckergehauses (2, 3) mit einer entsprechenden Netzanschlußkabel-Führung (37) und der Abschlußdeckel (5) mit einer entsprechenden, das Netzanschlußkabel (9) im fertigmontierten Zustand von Steckergehäuse (2, 3) und Abschlußdeckel (5) gegen die Netzanschlußkabel-Führung (37) andrückenden Kabelschelle (51) versehen ist.

11. Verbindungs-Vorrichtung nach Anspruch 10, dadurch gekennzeichnet, daß der Abschlußdeckel (5) im über die Ausgangsseite (41) und das herausgeführte Netzanschlußkabel (9) überklappten Zustand über das Oberteil (3) ans Unterteil (2) des Steckergehäuses (2, 3) mittels der Schrauben (11, 12) für die Kabelschelle (51) festlegbar ist (Fig. 1, 5).

12. Verbindungs-Vorrichtung nach einem der Ansprüche 1 bis 11, dadurch gekennzeichnet, daß das Unterteil (2) und/oder das Oberteil (3) des Steckergehäuses (2, 3) bzw. das Gegensteckergehäuse (4) mit Stegen (28 bzw. 33) zur formschlüssigen bzw. kraftschlüssigen Sicherung der eingelegten Steckerstifte und/oder Steckerhülsen bzw. Gegensteckerzungen und/oder Gegensteckerhülsen in Steck- bzw. Gegensteckrichtung versehen sind.

13. Verfahren zur Herstellung der Ver-bindungen mittels einer Verbindungs-Vorrich-tung nach einem der Ansprüche 10-12, gekennzeichnet durch folgende Verfahrensschritte :

a) Unterteil (2) des Steckergehäuses auf Ständerblechpaket (1) aufschieben,

b) Ständerspulenenden (811) für verschiede-ne Schalt- bzw. Verbindungsstellen gruppenwei-se ordnen und jede Gruppe in je einer Fixiergabel (21, 22) festlegen,

c) Endcrimps für « passive » Kontaktstellen anschlagen und in Kammern des Unterteils einlegen,

d) die verbleibenden, den verschiedenen Schaltstellen zugeordneten Gruppen an je eine Steckerzunge (6) ancrimpen und Steckerzungen in Kammern (23) des Unterteils (2) einlegen,

e) Oberteil (3) über bestücktes Unterteil (2) überklappen und gegenseitig verrasten,

f) derart verschaltete Ständerwicklung elektrisch überprüfen, u.U. neu verschalten nach Öffnen des Steckergehäuses (2, 3),

g) Wicklung formen und verfestigen,

h) Gegensteckergehäuse (4) mit Netzan-schlußkabel (9) und übergeklapptem Abschluß-deckel (5) auf Steckergehäuse (2, 3) aufstecken und Kabelschelle (51) mit Zugentlastung am Unterteil (2) des Steckergehäuses festschrauben.

## Claims

1. A synthetic resin connecting device comprising at least two components for fixing to the stator of a small electric motor and connect to the stator coil ends (811) or to an outer mains connection cable (9), as the case may be, a lower component (2) that is to be fixed to the stator being provided with conelike fixing prongs (21, 22) which extend into the region of the winding head to accommodate and fix the stator coil ends (811), and having moulded chambers (23) open towards the upper component that is to be fixed to the lower component, into which are inserted the stator coil ends (811) and the outer mains connection cable (9) that is to be fixed in their position by engaging the upper component (3) with the lower component (2), characterised in that said connecting device is a plug housing (2, 3) fixed by its lower component (2) to the stator core (8) and has plug pins (6) or plug sockets, as the case may be, connected to the stator coil ends (811) and/or to the outer mains connection cable (9), held positively in form-locking fashion in the chambers (23) of the lower component (2), and at least in the vicinity of the plug pins or sockets the fixing prongs (21, 22), which are moulded to the plug housing (2, 3) represent channels having side walls (211, 211 and 221, 221) to mutually electrically insulate the inserted stator coil ends, and the upper component (3) is provided with covers (31, 32) which, in the mounted state, externally seal the channels between the side walls in the radial direction.

2. A connecting device as claimed in Claim 1, characterised in that the upper component (3) is connected to the lower component (2) via an integral hinge (35) and locked or screwed thereto after being closed.

3. A connecting device as claimed in Claim 1 and/or 2, characterised in that the fixing prongs (21, 22) are arranged on the lower component (2) of the plug housing (2, 3) in accordance with the slot pitch of the stator core (1), and are formed in such manner that spaces remain between the fixing prongs (21, 22) for the unobstructed introduction of binding prongs during the formation and fixing of the winding head (81).

4. A connecting device as claimed in one of Claims 1 to 3, characterised in that the fixing prongs (21, 22) simultaneously represent axial stops for the axial fixing of the lower component (2) of the plug housing (2, 3), which lower component is placed in position in slots in the stator core (1) at the end. (Fig. 3, 6).

5. A connecting device as claimed in one of Claims 1 to 4, characterised in that both plug pins (6) or sockets connected to the stator coil ends, as the case may be, and corresponding plug sockets (7) or pins, as the case may be, connected to the ends of the outer mains connection cable (9), are fixed in the plug housing (2, 3).

6. A connecting device as claimed in one of Claims 1 to 5, characterised in that the plug pins (6) or sockets, as the case may be, which are connected to the stator coil ends (811), are fixed in the plug housing (2, 3) and corresponding counter-plug sockets (7) or counter-plug pins, as the case may be, which are connected to the ends of the outer mains connection cable (9), are fixed in a counter-plug housing (4) which can be placed on to the plug housing (2, 3) (Fig. 10, 12).

7. A connecting device as claimed in Claim 6, characterised in that the counter-plug housing (4) forms part of an external connection cable of a device, in particular an automatic washing machine, into which a small motor, provided with the plug housing (2, 3), is installed.

8. A connecting device as claimed in Claim 6, characterised in that at least on its mains connection cable output side (41), the counter-plug housing (4) is provided with a folding cover (5) over the output side (41) and a part of the outgoing mains connection cable (9).

9. A connecting device as claimed in Claim 8, characterised in that in the folded over state the cover (5) is fixed to the counter-plug housing (4) (catch hooks 42 ; 42 and catch lugs 52 ; 52) (Fig. 9).

10. A connecting device as claimed in one of Claims 8 and 9, characterised in that a tension-relieving support of the mains connection cable (9) is provided by the upper component (3) of the plug housing (2, 3) being provided with a corresponding mains connection cable guide (37), and the cover (5) provided with a corresponding cable clip (51) which acts when the plug housing (2, 3) and cover (5) are in the assembled state to press the mains connection cable (9) against the mains connection cable guide (37).

11. A connecting device as claimed in Claim 10, characterised in that when it is folded over the output side (41) and the outgoing mains connection cable (9), the cover (5) is fixed via the upper component (3) to the lower component (2) of the plug housing (2, 3) by means of the screws (11, 12) for the cable clip (51) (Fig. 1, 5).

12. A connecting device as claimed in one of Claims 1 to 11, characterised in that the lower component (2) and/or the upper component (3) of the plug housing (2, 3) and counter-plug housing (4) are provided with cross members (28 and 33 respectively) which serve, as the case may be, to secure in shape-locking or force-locking fashion, the inserted plug pins and/or plug sockets and counter-plug pins and/or counter-plug sockets in the plug-in direction or the counter-plug-in direction, as the case may be.

13. A method of producing connections by means of a connecting device as claimed in one of Claims 10 to 12, characterised by the following process steps :

a) place the lower component (2) of the plug housing on to the stator core (1),

b) arrange the stator coil ends (811) in groups for various switching or connecting positions and fix each group in a fixing prong (21, 22),

c) fix the end crimps for « passive » contact points and insert these in chambers of the lower component,

d) crimp each of the remaining groups, assigned to the various switching positions, to a plug pin (6) and insert the plug pins in chambers (23) of the lower component (2),

e) close the upper component (3) over the equipped lower component (2) and. lock these together,

f) carry out an electrical check of the stator winding which has been wired in this way, and if necessary rewire after opening the plug housing (2, 3),

g) form and fix the winding,

h) place the counter-plug housing (4), with mains connection cable (9) and closed cover (5) on to the plug housing (2, 3) and screw the cable clip (51) with traction relief to the lower component (2) of the plug housing.

## Revendications

1. Dispositif de liaison en matière plastique formé d'au moins deux éléments, pouvant être fixé sur le stator d'un petit moteur électrique, et pour relier les extrémités (811) de la bobine statorique ou pour raccorder un câble extérieur (9) de raccordement au réseau, à une partie inférieure (2) pouvant être fixée sur le stator et comportant des fourches de fixation (21, 22) en forme de peigne, qui s'étendent jusque dans la zone de la tête de bobinage et servent à recevoir et à fixer les extrémités (811) de la bobine statorique, ainsi que des chambres (23) formées par façonnage, ouvertes en direction d'une partie supérieure pouvant être fixée sur la partie inférieure et servant à l'insertion des extrémités (811) de la bobine statorique et du câble extérieur (9) de raccordement au réseau et qui peuvent être fixées dans leur position par application de la partie supérieure (3) sur la partie inférieure (2), caractérisé par le fait qu'un boîtier de connecteur (2, 3) est fixé, en tant que dispositif de liaison, par sa partie inférieure (2) au paquet de tôles statoriques (8), que des broches de connexion (6) ou des douilles de connexion reliées aux extrémités (811) de la bobine statorique et/ou au câble extérieur (9) de raccordement au réseau sont maintenues selon une liaison par formes complémentaires dans les chambres (23) de la partie inférieure (2), et qu'au moins à proximité des broches de connexion ou des douilles de connexion, les fourches de fixation (21, 22), réunies axialement par façonnage au boîtier de connecteur (2, 3), sont réalisées à la manière de canaux avec des parois latérales (211, 211 ou 221, 221), dans le sens de l'obtention d'une isolation électrique réciproque des extrémités enfichées de la bobine statorique, ou que la partie supérieure (3) est équipée d'éléments de recouvrement (31, 32) qui, à l'état monté, ferment radialement vers l'extérieur les canaux présents entre les parois latérales.

2. Dispositif de liaison suivant la revendication 1, caractérisé par le fait que la partie supérieure (3) est reliée à la partie inférieure (2) par l'intermédiaire d'une charnière (35) en forme de bande formée d'un seul tenant et, après fermeture par rabattement, peut être fixée à cette partie inférieure par encliquetage ou par vissage.

3. Dispositif de liaison suivant la revendication 1, et/ou 2, caractérisé par le fait que les fourches de fixation (21, 22) sont disposées, conformément au pas des encoches du paquet de tôles statoriques (1), sur la partie inférieure (2) du boîtier de connecteur (2, 3) et sont conformées de telle sorte que, lors de la formation et de la fixation de la tête de bobinage (81), il subsiste, entre les fourches de fixation (21, 22), des espaces libres respectifs permettant le passage libre de fourches d'enrubannage.

4. Dispositif de liaison suivant l'une des revendications 1 à 3, caractérisé par le fait que les fourches de fixation (21, 22) sont réalisées simultanément sous la forme de butées axiales servant à réaliser la fixation axiale de la partie inférieure (2) du boîtier de connecteur (2, 3), pouvant être introduite frontalement dans des encoches du paquet de tôles statoriques (1) (figures 3, 6).

5. Dispositif de liaison suivant l'une des revendications 1 à 4, caractérisé par le fait qu'aussi bien des broches de connexion (6) ou des douilles de connexion, reliées aux extrémités (811) de la bobine statorique, que des douilles de connexion (7) ou des broches ʻde connexion correspondantes reliées aux extrémités du câble extérieur (9) de raccordement au réseau, sont fixées dans le boîtier de connecteur (2, 3).

6. Dispositif de liaison suivant l'une des revendications 1 à 5, caractérisé par le fait que les broches de connexion (6) ou les douilles de connexion, qui sont reliées aux extrémités (811·) de la bobine statorique, sont fixées dans le boîtier de connecteur (2, 3) et que les douilles antagonistes de connexion (7) ou des broches antagonistes de connexion correspondantes, qui sont reliées aux extrémités du câble extérieur (9) de raccordement au réseau, sont fixées dans un boîtier de connecteur antagoniste (4) pouvant être enfiché sur le boîtier de connecteur (2, 3) (figures 10, 12).

7. Dispositif de liaison suivant la revendication 6, caractérisé par le fait que le boîtier de connecteur antagoniste (4) fait partie d'un câble extérieur de raccordement d'un appareil, notamment d'une machine à laver automatique, dans laquelle un petit moteur muni du boîtier de connecteur (2, 3) peut être monté.

8. Dispositif de liaison suivant la revendication 6, caractérisé par le fait que le boîtier de connecteur antagoniste (4) est muni, au moins sur sa face (41) de sortie du câble de raccordement au réseau, d'un couvercle de fermeture (5) rabattable sur la face de sortie (41) et sur une partie du câble ressorti (9) de raccordement au réseau.

9. Dispositif de liaison suivant la revendication 8, caractérisé par le fait que le couvercle de fermeture (5) peut être bloqué, à l'état rabattu, sur le boîtier de connecteur antagoniste (4) (crochets d'encliquetage 42 ; 42 ou becs d'encliquetage 52 ; 52) (figure 9).

10. Dispositif de liaison suivant l'une des revendications 8 et 9, caractérisé par le fait qu'en vue de l'obtention d'un maintien, supprimant les contraintes de traction, du câble (9) de raccordement au réseau, la partie supérieure (3) du boîtier de connecteur (2, 3) comporte un guide correspondant (37) pour le passage du câble de raccordement au réseau et que le couvercle de fermeture (5) comporte une attache pour câble correspondante (51), qui serre le câble (9) de raccordement au réseau contre le guide (37) de passage pour ce câble, lorsque le boîtier de connecteur (2, 3) et le couvercle de fermeture (5) sont à l'état monté.

11. Dispositif de liaison suivant la revendication 10, caractérisé par le fait qu'à l'état fermé par rabattement sur la face de sortie (41). et sur le câble ressorti (9) de raccordement au réseau, le couvercle de fermeture (5) peut être bloqué par l'intermédiaire de la partie supérieure (3) sur la partie inférieure (2) du boîtier de connecteur (2, 3), au moyen des vis (11, 12) prévues pour l'attache pour câble (51) (figures 1, 5).

12. Dispositif de liaison suivant l'une des revendications 1·à 11, caractérisé par le fait que la partie inférieure (2) et/ou la partie supérieure (3) du boîtier de connecteur (2, 3) ou du boîtier de connecteur antagoniste (4) sont munies de barrettes (28 ou 33) servant à bloquer, selon une liaison par formes complémentaires ou selon une liaison de force, les broches de connexion insérées et/ou les douilles de connexion, ou des languettes de connexion antagonistes et/ou des douilles de connexion antagonistes, dans la direction d'enfichage ou dans la direction d'enfichage opposée.

13. Procédé pour réaliser les liaisons à l'aide d'un dispositif de liaison suivant l'une des revendications 10-12, caractérisé par les phases opératoires suivantes :

a) emmancher la partie inférieure du boîtier de connecteur sur le paquet de tôles statoriques (1),

b) disposer par groupes les extrémités (811) de la bobine statorique pour différents points de commutation ou de liaison et fixer chaque groupe dans une fourche respective de fixation (21, 22),

. c) fixer des éléments de sertissage d'extrémité pour des points de contact « passifs » et les insérer dans des cavités de la partie inférieure,

d) fixer par sertissage les groupes restants, associés aux différents points de commutation, à des languettes de connexion respectives (6) dans des cavités (23) de la partie inférieure (2),

e) rabattre la partie supérieure (3) par-dessus la partie inférieure (2) équipée et réaliser un verrouillage réciproque de ces parties,

f) contrôler du point de vue électrique l'enroulement statorique ainsi câblé, et éventuellement le câbler à nouveau après l'ouverture du boîtier de connecteur (2, 3),

g) former et fixer le bobinage,

h) enficher le boîtier de connecteur antagoniste (4) sur le câble (9) de raccordement au réseau et enficher le couvercle de fermeture (5) rabattu sur le boîtier de connecteur (2, 3) et fixer fermement par visage l'attache pour câble (51) à la partie inférieure (2) du boîtier de connecteur, en réalisant une suppression de la contrainte de traction.

FIG 1

FIG 2

FIG 3

FIG 4

FIG 5

FIG 6

FIG 7

FIG 8

FIG 9

FIG 10

FIG 11

FIG 12